(19) Europäisches Patentamt
European Patent Office
Office européen des brevets

(11) Veröffentlichungsnummer: **0 488 931 B1**

(12) **EUROPÄISCHE PATENTSCHRIFT**

(45) Veröffentlichungstag der Patentschrift: **23.08.95**

(51) Int. Cl.[6]: **C08K 5/37**, C08L 21/00

(21) Anmeldenummer: **91710042.2**

(22) Anmeldetag: **18.11.91**

Die Akte enthält technische Angaben, die nach dem Eingang der Anmeldung eingereicht wurden und die nicht in dieser Patentschrift enthalten sind.

(54) **Kautschukvulkanisate mit verbessertem Hysterese-Verhalten.**

(30) Priorität: **29.11.90 DE 4038000**

(43) Veröffentlichungstag der Anmeldung:
**03.06.92 Patentblatt 92/23**

(45) Bekanntmachung des Hinweises auf die Patenterteilung:
**23.08.95 Patentblatt 95/34**

(84) Benannte Vertragsstaaten:
**DE ES FR GB IT**

(56) Entgegenhaltungen:
**EP-A- 0 142 707**
**FR-A- 2 220 560**

(73) Patentinhaber: **BAYER AG**
**D-51368 Leverkusen (DE)**

(72) Erfinder: **Scholl, Thomas, Dr.**
**Alte Wipperfürther Str. 24 a**
**W-5060 Bergisch Gladbach 2 (DE)**
Erfinder: **Engels, Hans-Wilhelm, Dr.**
**Dickeicherfeld 12**
**W-5014 Kerpen 3 (DE)**
Erfinder: **Eisele, Ulrich, Dr.**
**Alfred-Kubin-Strasse 13**
**W-5090 Leverkusen 1 (DE)**
Erfinder: **Eholzer, Ulrich, Dr.**
**Gerstenkamp 10**
**W-5000 Köln 80 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die Erfindung betrifft Kautschukmischungen mit verbesserten Hysterese-Eigenschaften sowie eine Verwendung zur Herstellung der Kautschukvulkanisate.

Unter Hystereseverlust versteht man in der Kautschuktechnologie den Engergieverlust, der bei dynamischer Beanspruchung des Elastomeren irreversibel in Wärme umgewandelt wird. Als Meßgröße für Hystereseverluste dient der tan $\delta$, der als das Verhältnis von Verlustmodul zu Speichermodul definiert ist; vgl. z.B. auch DIN 53 513 und DIN 53 535. Eniedrigung des tan $\delta$ im anwendungstechnisch wichtigen Temperatur/Frequenz- bzw. Amplituden-Bereich führt z.B. zu verminderten Hitzeaufbau in Elastomeren. Reifen aus Kautschuk mit vermindertem Hystereseverlust zeichnen sich durch verminderten Rollwiderstand und infolgedessen durch geringeren Treibstoffverbrauch der damit ausgestatteten Fahrzeuge aus.

Aus der US-PS 4 690 965 sind beispielsweise Ruß-gefüllte Kautschukvulkaniste bekannt, die aufgrund ihres Gehaltes an Nitrosoanilinen einen verminderten Hitzeaufbau (Heat build up), d.h. auch einen verminderten Hystereseverlust, zeigen. EP 253 365 beschreibt bestimmte Nitro-amine, die zu vergleichbaren Effekten führen. Wegen der Gefahr der Bildung cancerogener Nitrosamine durch Umnitrosierung besteht jedoch der Wunsch nach Kautschukhilfsmitteln, die frei von Nitro- und Nitrosogruppen sind.

US-PS 4 761 446 beschreibt Kautschukvulkanisate, die mit bestimmten Benzimidazolinen modifiziert wurden. US-PS 4 762 870 beschreibt Kautschukvulkanisate, modifiziert mit Hydroxy-benzimidazoloxiden. US-PS 4 822 845 beschreibt Kautschukvulkanisate, modifiziert mit heterocyclischen Di-N-oxiden. Alle drei beschriebenen Kautschukvulkanisate zeigen zwar verbesserte Hystereseeigenschaften, wie geringeren Hitzeaufbau und geringeren tan $\delta$, in allen drei Fällen führt jedoch das Additiv zu erheblichen Einbußen in der Reißdehnung und Reißfestigkeit. Aus diesem Grund konnten sich diese Modifikatoren in der Praxis nicht durchsetzen. Darüberhinaus sind die drei letztgenannten Modifikatoren nur in SBR (und hier speziell nur Lösungs-SBR) wirksam. In der EP 366 952 wird ein Verfahren zur Herstellung von Kautschukvulkanisaten mit verringerten Hystereseverlusten beschrieben. Die beschriebenen Hystereseverbesserer lassen sich jedoch im reifentechnisch wichtigen Naturkautschuk nicht verwenden, da sie das Molekulargewicht des Naturkautschuks drastisch abbauen (siehe hierzu US-PS 2.470.948).

Überraschenderweise wurde nun gefunden, daß gefüllte Kautschukvulkanisate, denen bestimmte Carboxyalkyl-oligosulfide zugesetzt wurden, verringerte Hystereseverluste, bessere Elastizität sowie kaum Einbußen an Festigkeit und Dehnung aufweisen.

Gegenstand der Erfindung sind Kautschukmischungen enthaltend mindestens einen Kautschuk, einen Vernetzer, einen Füllstoff, gegebenenfalls weitere Kautschukhilfsprodukte sowie mindestens ein Carboxyalkyloligosulfid der Formel

$$R^1\text{-}(S)_r\text{-}R^2 \qquad (I),$$

worin

R¹ und R² gleich oder verschieden sind und einen ein-bis vierfach durch eine Carboxyl- oder eine Carboxylat-Gruppe substituierten $C_1$-$C_{18}$-Alkylrest oder $C_5$-$C_{18}$-Cycloalkylrest bedeuten, wobei im Fall einer Carboxylat-Gruppe als Kation eine Ammoniumgruppe, eine $C_1$-$C_{18}$-Mono-, di- oder Trialkylammonium- oder $C_6$-$C_{18}$-Mono-, di- oder Triarylammonium- oder $C_7$-$C_{21}$-Mono-, di- oder Trialkylarylammoniumgruppe oder ein ein- bis vierwertiges Metallatom steht und

r eine ganze Zahl von 3 bis 6 bedeutet,

in Mengen von 0,1 bis 10 Gew.-%, bezogen auf Kautschuk.

Bevorzugte Carboxyalkyloligosulfide sind solche Verbindungen der Formel (I), in denen $R^1$ und $R^2$ die gleiche Bedeutung besitzen und einen aliphatischen Rest mit 2 bis 6 Kohlenstoffatomen haben. Diese Verbindungen können ein- bis vierfach durch eine Carboxyl- oder Carboxylat-Gruppe substituiert sein. Bevorzugt sind sie ein- oder zweifach substituiert. Als Beispiele werden folgende Carboxyalkyl-oligosulfide aufgeführt:

$HO_2C\text{-}CH_2\text{-}S_r\text{-}CH_2\text{-}CO_2H$ mit r = 3,4,5,6, bevorzugt 4,5,

$HO_2\text{-}CH_2\text{-}CH_2\text{-}S_r\text{-}CH_2\text{-}CH_2\text{-}CO_2H$ mit r = 3,4,5,6, bevorzugt 4,5,

$HO_2C\text{-}(CH_2)_4\text{-}S_r\text{-}(CH_2)_4\text{-}CO_2H$ mit r = 3,4,5,6, bevorzugt 4,5,

$HO_2C\text{-}(CH_2)\text{-}_{10}\text{-}S_r\text{-}(CH_2)_{10}\text{-}CO_2H$ mit r = 3,4,5,6, bevorzugt 4,5,

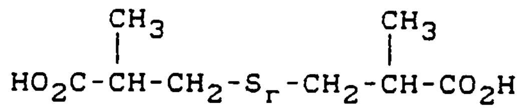

mit r = 3,4,5,6, bevorzugt 4,5,

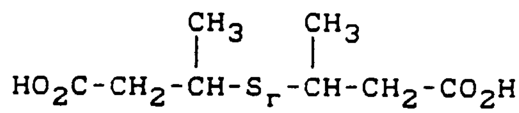

mit r = 3,4,5,6, bevorzugt 4,5,

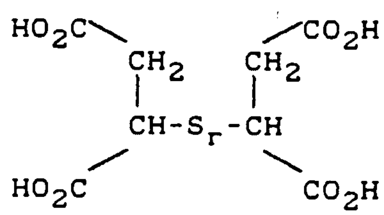

mit r = 3,4,5,6, bevorzugt 4,5,

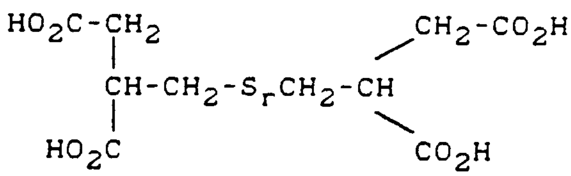

mit r = 3,4,5,6, bevorzugt 4,5,

Neben den aufgeführten Carboxylverbindungen können selbstverständlich die entsprechenden Natrium-, Kalium-, Kobalt-, Eisen-, Nickel-, Ammonium-, Magnesium-, Calcium-, Zinn- und/oder Zink-Salze, bevorzugt Natrium-, Kalium-, Calcium-, Zink-, Ammonium- eingesetzt werden.

Besonders bevorzugt sind folgende Verbindungen der Formel (I):

$HO_2C-(CH_2)_2-S_4-(CH_2)_2-CO_2H$, $HO_2C-(CH_2)_4-S_4-(CH_2)_4-CO_2H$,

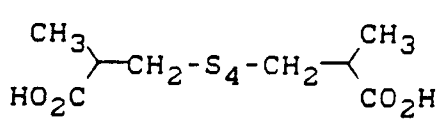

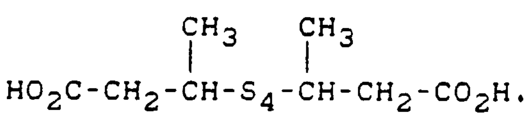

Die Carboxyalkyl-oligosulfide der Formel (I) können sowohl einzeln als auch im Gemisch untereinander eingesetzt werden.

Die Herstellung der Verbindungen der Formel (I) kann nach an sich bekannten Verfahren erfolgen, z.B. durch Umsetzung von Carboxy-alkylhalogeniden mit Natriumpolysulfiden gemäß Reaktionsschema A:

A: $HO_2C$-Alkyl-Hal + $Na_2S$ → (I) (mit r = 2-7) + Na-Hal

oder durch Umsetzung entsprechender ω-Mercapto-alkylcarbonsäuren mit $SCl_2$ bzw. $S_2Cl_2$ gemäß Reaktionsschemen B und C:

B: $HO_2C$-Alkyl-SH + $SCl_2$ → (I) (mit r = 3) + HCl

C: $HO_2C$-Alkyl-SH + $S_2Cl_2$ → (I) (mit r = 4) + HCl

oder z.B. durch Umsetzung von Diorganodisulfiden mit $SCl_2$ gemäß Reaktionsschema D:

D: $HO_2C$-Alkyl-S-S-H + $SCl_2$ → (I) (mit r = 5) + HCl

Die Umsetzung von Natriumpolysulfiden mit Alkylhalogeniden gemäß Schema A führt zu Gemischen verschiedener Bis-(carboxyalkyl)-polysulfiden, da es sich bei den Natriumpolysulfiden um Gemische verschiedener Sulfide der Zusammensetzung $Na_2S_x$ handelt (zur Durchführung der Reaktionen gemäß A-D, siehe Houben-Weyl, Methoden der organischen Chemie, Band 9, Seite 88 ff (1955) und Band E 11 (1985), Thieme Verlag Stuttgart).

Als Kautschuke können für die erfindungsgemäßen Kautschukvulkanisate sowohl Naturkautschuk als auch Synthesekautschuke verwendet werden, wobei diese mindestens 5 Gew.-% copolymerisierte Einheiten, die von einem $C_4$-$C_{12}$-Dien stammen, enthalten. Bevorzugte Synthesekautschuke sind beispielsweise bei W. Hofmann, Kautschuktechnologie, Gentner-Verlag, Stuttgart 1980, beschrieben. Sie umfassen u.a.

- BR - Polybutadien
- ABR - Butadien/Acrylsäure-$C_{1-4}$-alkylester-Copolymerisate mit Acrylester-Gehalten von 5-60, vorzugsweise 5-50 Gew.-%
- CR - Polychloropren
- IR - Polyisopren
- SBR - Styrol/Butadien-Copolymerisate mit Styrolgehalten von 1- 60, vorzugsweise 10-50 Gew.-%
- NBR - Butadien/Acrylnitril-Copoylmerisate mit Acrylnitrilgehalten von 5-60, vorzugsweise 10-50 Gew.-%

sowie Mischungen dieser Kautschuke. Die bevorzugt verwendeten Kautschuke besitzen Glasübergangstemperaturen von unter 20 °C, besonders bevorzugt unter 0 °C, bestimmt im Torsionsschwingversuch nach DIN 53 445. Besonders bevorzugte Kautschuke sind Naturkautschuk, Polybutadien und Styrol/Butadien-Copolymerisate.

Ein weiterer Gegenstand der vorliegenden Erfindung ist ein Verfahren zur Herstellung von Kautschukvulkanisaten, das dadurch gekennzeichnet ist, daß man

(i) den unvulkanisierten Kautschuk

(ii) 10 bis 120, vorzugsweise 30 bis 80 Gew.-%, bezogen auf Kautschuk (i), Ruß und/oder Kieselsäure und

(iii) 0,1 bis 10, vorzugsweise 0,1 bis 3 Gew.-%, bezogen auf Kautschuk (i), Carboxyalkyl-oligo-sulfide der Formel (I)

$R^1$-$(S)_r$-$R^2$ (I),

worin

$R^1$ und $R^2$ gleich oder verschieden sind und einen ein-bis vierfach durch eine Carboxyl-oder eine Carboxylat-Gruppe substituierten $C_1$-$C_{18}$-Alkylrest oder $C_5$-$C_{18}$-Cycloalkylrest bedeuten, wobei im Fall einer Carboxylat-Gruppe als Kation eine Ammoniumgruppe, eine $C_1$-$C_{18}$-Mono-, di- oder Trialkylammonium-oder $C_6$-$C_{18}$-Mono-, di- oder Triarylammonium- oder $C_7$-$C_{21}$-Mono-, di- oder Trialkylarylammoniumgruppe oder ein ein- bis vierwertiges Metallatom steht und

r eine ganze Zahl von 3 bis 6 bedeutet,

bei Massetemperaturen von 120 - 200 °C und Scherraten von 1 bis 1000 $sec^{-1}$ mischt, anschließend weitere Vulkanisationschemikalien (Vernetzer) und gegebenenfalls weitere Kautschukhilfsprodukte bei Temperaturen unter 120 °C, bevorzugt 20 -110 °C, zumischt und anschließend das Gemisch bei üblichen Temperaturen vulkanisiert.

Zur Herstellung der erfindungsgemäßen Kautschukmischungen mit verbesserten Hystereseeigenschaften können alle verstärkenden Ruße verwendet werden. Bevorzugte Oberflächen betragen 35-200 $m^2$ /g (CTAB-Bestimmung). Besonders genannt seien SAF, HAF, FEF, ISAF und SRF-Ruße. Gemische von zwei oder mehr verschiedenen Rußen bzw. von Rußen mit Kieselsäuren (mit und ohne Füllstoffaktivatoren) können ohne weiteres verwendet werden.

Zur Herstellung der erfindungsgemäßen Kautschukvulkanisate mit verbesserten Hystereseeigenschaften können darüberhinaus alle verstärkenden "silikatischen Füllstoffe" verwendet werden.

Als "silikatische Füllstoffe" können hochdisperse Kieselsäuren (Siliciumdioxid) mit spezifischen Oberflächen im Bereich von 5 bis 1000 $m^2$ /g (BET-Methode) und Primärteilchengrößen von ca. 10 bis 400 nm eingesetzt werden. Weiterhin synthetische und natürliche Silikate sowie Glasfasern und Glasfasererzeugnisse (vgl. hierzu DE 2 255 577). Die "silikatischen Füllstoffe" und Ruße können wie erwähnt, im Gemisch untereinander eingesetzt werden. Dabei können beliebige Mischungsverhältnisse gewählt werden. Diese richten sich insbesondere nach dem jeweiligen Einsatzwechsel der Kautschukvulkanisate.

Für das erfindungsgemäße Verfahren können den Kautschuk-Rohmischungen noch weitere Kautschukhilfsprodukte in üblichen Mengen zugemischt werden, wie Weichmacher, Harze, Faktisse und Stabilisatoren, zur Erzielung bestimmter Rohmischungs-und Vulkanisateigenschaften.

Zur Vulkanisation können die aus der Kautschuktechnik bekannten Vernetzungssysteme wie Schwefel, Peroxide, Polyisocyanate, Metalloxide, Phenolharze und deren Kombinationen eingesetzt werden. Man wird das zur Vulkanisation verwendete Vernetzungssystem vorzugsweise an der Art der verwendeten Kautschuke ausrichten. Schwefelvernetzungssysteme werden besonders bevorzugt.

Zur Erzielung einer optimalen Vernetzungskinetik können weitere Additive, wie Beschleuniger, Verzögerer etc. zugesetzt werden.

Die Vernetzungssysteme (Vulkanisationschemikalien) und Kautschukhilfsprodukte werden bei Temperaturen unter 120 °C, bevorzugt bei 20 - 110 °C zugemischt. Die Vulkanisatinn kann bei Temperaturen von 100 - 200 °C, vorzugsweise bei 130 - 180 °C, gegebenenfalls unter einem Druck von 10 - 200 bar, erfolgen.

Das Mischen des Kautschuks, der Füllstoffe und der erfindungsgemäßen Carboxyalkyl-oligosulfide der Formel (I) kann in üblichen Mischaggregaten durchgeführt werden, beispielsweise in Walzen, Innenmischer und Mischextrudern, die in der Regel mit Scherraten von 1-1000 $sec^{-1}$, vorzugsweise 1-200 $sec^{-1}$, arbeiten.

Die erfindungsgemäßen Kautschukmischungen lassen sich zu dynamisch hoch beanspruchten Artikeln, wie Fahrzeugreifen, Förderbänder, Treibriemen und Luftfederbelägen, verarbeiten.

Beispiel 1:

Herstellung von

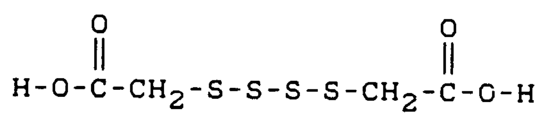

92 g (1,0 Mol) Thioglykolsäure werden in 500 ml Toluol gelöst und bei 5 °C unter Durchleiten von Stickstoff mit 67,5 g (0,5 Mol) Dischwefeldichlorid versetzt. Nach dem Erwärmen auf Raumtemperatur läßt man 8 Stunden nachrühren. Nach Abfiltrieren und Trocknen erhält man ca. 110 g farblose Kristalle mit dem Schmelzpunkt 94 °C.

Beispiel 2:

Herstellung von

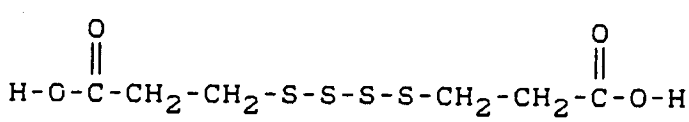

106 g (1,0 Mol) 3-Mercapto-propionsäure in 500 ml Toluol werden bei 5 °C mit 67,5 g (0,5 Mol) Dischwefeldichlorid versetzt und unter Durchleiten von Stickstoff 8 Stunden bei Raumtemperatur gerührt.

Nach dem Abfiltrieren und Trocknen resultieren 133,5 g farblose Kristalle mit dem Schmelzpunkt 130 bis 133 ° C.
Elementaranalyse: C: 26,3 (26,3), H: 3,5 (3,65), S: 46,2 (46,7).
Säurezahl: 407

Beispiel 3:

Herstellung von

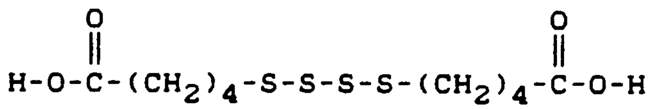

Verfährt man wie in Beispiel 1 und 2 unter Verwendung von 67 g (0,5 mol) 5-Mercepto-pentansäure und 33,6 g (0,25 Mol) Dischwefeldichlorid so erhält men 79 g farblose Kristalle mit dem Schmelzpunkt 86 ° C.

Beispiel 4:

Herstellung von

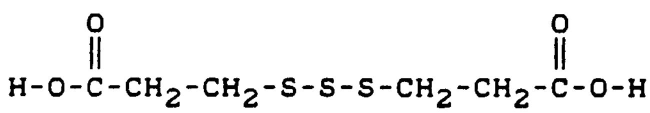

106 g (1,0 Mol) 3-Mercapto-propionsäure in 500 ml Toluol werden bei 5 ° C unter Durchleiten von Stickstoff mit 51 g (0,5 Mol) Schwefeldichlorid versetzt und 8 Stunden bei Raumtemperatur gerührt. Nach dem Abfiltrieren und Trocknen resultieren 124 g farblose Kristalle mit dem Schmelzpunkt 150-152 ° C.

Beispiel 5:

Herstellung von $O_2C-CH_2-S-S-S-S-CH_2-CO_2\ Zn^{2+}$
246 g (1,0 Mol) der Verbindung gemäß Beispiel 1 werden in 1 l Toluol dispergiert und bei Raumtemperatur mit 40,5 g (0,5 Mol) Zinkoxid versetzt. Man rührt 3 Stunden bei 50 ° C nach. Nach Abfiltrieren und Trocknen resultieren 270 g farblose Kristalle mit dem Schmelzpunkt 110 ° C.

Beispiele 6-9: (Herstellung der Vulkanisate)

In einem Kneter werden bei 170 ° C Innentemperatur (Drehzahl ca. 50 Upm) Kautschuk-Mischungen hergestellt. Die Mischzeit beträgt 5 Minuten.

Mischungskomponenten:

| | |
|---|---|
| Naturkautschuk SMR 5/Defo 700 | 100 Gew.-Teile |
| Ruß N 339 (Fa. Degussa) | 55 Gew.-Teile |
| Aromatischer Weichmacher[1]) | 3,0 Gew.-Teile |
| Zinkoxid | 5,0 Gew.-Teile |
| Ozonschutzwachs[2]) | 1,0 Gew.-Teile |
| N-Isopropyl-N'-phenyl-p-phenylendiamin[3]) | 1,0 Gew.-Teile |
| Additiv gemäß Beispiel 1 - 5 | 1,5 Gew.-Teile |

[1]) ®Ingralen 450
[2]) Ozonschutzwachs 111 (Rheinchemie)
[3]) Vulkanox 4010 NA (Bayer)

Die Mischungen werden anschließend auf einer Walze bei 50 °C mit

| | |
|---|---|
| Schwefel | 1,5 Gew.-Teile |
| und N-tert.-Butyl-mercaptobenzthiazolsulfenamid[4]) | 1,2 Gew.-Teile |

[4]) Vulkacit NZ (Bayer)

gemischt und 15 Minuten bei 140 °C vulkanisiert.

Tabelle 1

| | Vergleich | Bsp.6 | Bsp.7 | Bsp.8 | Bsp.9 |
|---|---|---|---|---|---|
| | ohne Additiv | mit Verb. Bsp.1 | mit Verb. Bsp.2 | mit Verb. Bsp.3 | mit Verb. Besp.6 |
| Modul 300 [MPa] | 18,8 | 19,5 | 21,0 | 19,5 | 19,0 |
| Festigkeit [MPa] | 23,5 | 23,3 | 23,5 | 23,5 | 23,2 |
| Dehnbarkeit [%] | 400 | 390 | 380 | 400 | 380 |
| Weiterreiß-festigkeit [N/mm] | 360 | 365 | 320 | 360 | 400 |
| Härte [Shore A] | 72 | 72 | 74 | 75 | 70 |
| Elastizität [%] | 43 | 49 | 48 | 47 | 49 |
| Tan δ 20°C DIN 53 535 | 0,146 | 0,120 | 0,117 | 0,125 | 0,114 |

Beispiele 10 - 11:

In einem Kneter werden bei 170 °C Innentemperatur (Drehzahl ca. 50 Upm) Kautschuk-Mischungen hergestellt. Die Mischseit beträgt 5 Minuten.

Mischungskomponenten:

| | |
|---|---|
| Lösungs-SBR (Buna SL 750) (ölverstreckt Ölgehalt 27,3 %) | 100 Gew.-Teile |
| Ruß N 339 (Fa. Degussa) | 85 Gew.-Teile |
| Stearinsäure | 1,5 Gew.-Teile |
| Aromatische Weichmacher[1]) | 5,0 Gew.-Teile |
| N-Isopropyl-N'-phenyl-p-phenylendiamin[3]) | 1,5 Gew.-Teile |
| Zinkoxid | 3,0 Gew.-Teile |
| Additiv gemäß Beispiel 1 - 5 | 1,5 Gew.-Teile |

[1]) ®Ingralen 450
[3]) Vulkanox 4010 NA (Bayer)

Die Mischungen werden anschließend auf einer Walze bei 50 ° C mit

| | |
|---|---|
| Schwefel | 1,2 Gew.-Teile |
| und N-tert.-Butyl-mercaptobenzthiazolsulfenami[4]) | 1,4 Gew.-Teile |

[4]) Vulkacit NZ (Bayer)

gemischt und 15 Minuten bei 150 °C vulkanisiert.

Tabelle 2:

| | Vergleich | Bsp.10 | Bsp.11 | Vergleich |
|---|---|---|---|---|
| | ohne Additiv | mit Verb. Bsp.2 | mit Verb. Bsp.6 | 1,0 phrb. US 4.822.845 Bsp. H 65 |
| Modul 300 [MPa] | 5,6 | 8,0 | 11,0 | nicht meßbar |
| Festigkeit [MPa] | 19,8 | 19,0 | 17,8 | 15,0 |
| Dehnbarkeit [%] | 500 | 420 | 470 | 280 |
| Weiterreiß-festigkeit [N/mm] | 215 | 180 | 205 | 135 |
| Härte [Shore A] | 65 | 67 | 65 | 67 |
| Elastizität [%] | 36 | 40 | 38 | 39 |
| Tan δ 60°C | 0,193 | 0,157 | 0,169 | 0,153 |

Beispiele 12:

In einem Kneter werden bei 170 °C Innentemperatur (Drehzahl ca. 50 Upm) Kautschuk-Mischungen hergestellt. Mischzeit 5 Minuten.

Mischungskomponenten:

| | |
|---|---|
| SBR (Buna Hüls 1712) | 137,5 Gew.-Teile |
| Ruß N 339 (Fa. Degussa) | 85 Gew.-Teile |
| Zinkoxid | 3,0 Gew.-Teile |
| Aromatischer Weichmacher[1]) | 5,0 Gew.-Teile |
| N-Isopropyl-N'-phenyl-p-phenylendiamin[3]) | 1,5 Gew.-Teile |
| Stearinsäure | 1,5 Gew.-Teile |
| Additiv gemäß Beispiel 1 - 5 | 1,5 Gew.-Teile |

[1]) ®Ingralen 450
[3]) Vulkanox 4010 NA (Bayer)

Die Mischungen werden anschließend bei 50 °C auf einer Walze mit

| | |
|---|---|
| Schwefel | 1,8 Gew.-Teile |
| und N-tert.-Butyl-mercaptobenzthiazolsulfenamid[4]) | 1,2 Gew.-Teile |

[4]) Vulkacit NZ (Bayer)

versetzt und gemischt und dann bei 150 °C (15 Minuten) vulkanisiert.

Tabelle 3

| | Vergleich | Bsp.12 |
|---|---|---|
| | ohne Additiv | mit Verb. Bsp.2 |
| Modul 300 [MPa] | 11,2 | 15,9 |
| Festigkeit [MPa] | 21,3 | 20,7 |
| Dehnbarkeit [%] | 560 | 405 |
| Weiterreißfestigkeit [N/mm] | 205 | 180 |
| Härte [Shore A] | 64 | 68 |
| Elastizität [%] | 29 | 32 |
| Tan $\delta$ 100 °C DIN 53 535 | 0,138 | 0,109 |

**Patentansprüche**
**Patentansprüche für folgende Vertragsstaaten : DE, FR, GB, IT**

**1.** Kautschukmischungen enthaltend mindestens einen Kautschuk, einen Vernetzer, einen Füllstoff, gegebenenfalls weitere Kautschukhilfsprodukte sowie mindestens ein Carboxyalkyloligosulfid der Formel

$R^1$-$(S)_r$-$R^2$

worin

$R^1$ und $R^2$ gleich oder verschieden sind und einen ein-bis vierfach durch eine Carboxyl- oder eine Carboxylat-Gruppe substituierten $C_1$-$C_{18}$-Alkylrest oder $C_5$-$C_{18}$-Cycloalkylrest bedeuten, wobei im Fall einer Carboxylat-Gruppe als Kation eine Ammoniumgruppe, eine $C_1$-$C_{18}$-Mono-, di- oder Trialkylammonium- oder $C_6$-$C_{18}$-Mono-, di- oder Triarylammonium- oder $C_7$-$C_{21}$-Mono-, di- oder Trialkylarylammoniumgruppe oder ein ein- bis vierwertiges Metallatom steht und

r eine ganze Zahl von 3 bis 6 bedeutet,

in Mengen von 0,1 bis 10 Gew.-%, bezogen auf Kautschuk.

**2.** Verwendung der Kautschukmischungen gemäß Anspruch 1 zur Herstellung von Kautschukvulkanisation.

**Patentanspruch für folgenden Vertragsstaat : ES**

1. Verfahren zur Herstellung von Kautschukvulkanisaten, dadurch gekennzeichnet, daß man
   (i) den unvulkanisierten Kautschuk
   (ii) 10 bis 120 Gew.-%, bezogen auf Kautschuk (i), Ruß und/oder Kieselsäure und
   (iii) 0,1 bis 10 Gew.-%, bezogen auf Kautschuk (i), Carboxyalkyl-oligosulfide der Formel

   $R^1$-$(S)_r$-$R^2$

   worin
   $R^1$ und $R^2$ gleich oder verschieden sind und einen ein-bis vierfach durch eine Carboxyl-oder eine Carboxylat-Gruppe substituierten $C_1$-$C_{18}$-Alkylrest oder $C_5$-$C_{18}$-Cycloalkylrest bedeuten, wobei im Fall einer Carboxylat-Gruppe als Kation eine Ammoniumgruppe, eine $C_1$-$C_{18}$-Mono-, di- oder Trialkylammonium- oder $C_6$-$C_{18}$-Mono-, di- oder Triarylammonium-oder $C_7$-$C_{21}$-Mono-, di- oder Trialkylarylammoniumgruppe oder ein ein- bis vierwertiges Metallatom steht und
   r eine ganze Zahl von 3 bis 6 bedeutet,

   bei Massetemperaturen von 120 - 200 °C und Scherraten von 1 bis 1000 $sec^{-1}$ mischt, anschließend weitere Vulkanisationschemikalien und gegebenenfalls weitere Kautschukhilfsprodukte bei Temperaturen unter 120 °C zumischt und anschließend bei üblichen Temperaturen vulkanisiert.

**Claims**
**Claims for the following Contracting States : DE, FR, GB, IT**

1. Rubber mixtures containing at least one rubber, a crosslinking agent, a filler, optionally other rubber auxiliaries and at least one carboxyalkyl oligosulfide corresponding to the following formula:

   $R^1$-$(S)_r$-$R^2$

   in which
   $R^1$ and $R^2$ may be the same or different and represent a $C_{1-18}$ alkyl radical or $C_{5-18}$ cycloalkyl radical substituted 1 to 4 times by a carboxyl group or by a carboxylate group; in the case of a carboxylate group, the cation is an ammonium group, a $C_{1-18}$ mono-, di- or trialkyl ammonium or $C_{6-18}$ mono-, di- or triaryl ammonium or $C_{7-21}$ mono-, di- or trialkylaryl ammonium group or a mono- to tetravalent metal atom and
   r is an integer of 3 to 6,

   in quantities of 0.1 to 10% by weight, based on rubber.

2. The use of the rubber mixtures claimed in claim 1 for the production of rubber vulcanizates.

**Claim for the following Contracting State : ES**

1. A process for the production of rubber vulcanizates, characterized in that
   (i) the unvulcanized rubber,
   (ii) 10 to 120% by weight, based on rubber (i), of carbon black and/or silica and
   (iii) 0.1 to 10% by weight, based on rubber (i), of carboxyalkyl oligosulfides corresponding to the following formula:

   $R^1$-$(S)_r$-$R_2$

   in which
   $R^1$ and $R^2$ may be the same or different and represent a $C_{1-18}$ alkyl radical or $C_{5-18}$ cycloalkyl radical substituted 1 to 4 times by a carboxyl group or by a carboxylate group; in the case of a carboxylate group, the cation is an ammonium group, a $C_{1-18}$ mono-, di- or trialkyl ammonium or $C_{6-18}$ mono-, di- or triaryl ammonium or $C_{7-21}$ mono-, di-or trialkylaryl ammonium group or a mono- to tetravalent metal atom and
   r is an integer of 3 to 6,

are mixed at melt temperatures of 120 to 200 °C and at shear rates of 1 to 1000 $sec^{-1}$, other vulcanization chemicals (crosslinking agents) and optionally other rubber auxiliaries are subsequently incorporated at temperatures below 120 °C and the mixture is subsequently vulcanized at typical temperatures.

**Revendications**

**Revendications pour les Etats contractants suivants: DE, FR, GB, IT**

1. Mélanges de caoutchoucs contenant au moins un caoutchouc, un agent réticulant, une matière de charge, le cas échéant d'autres produits auxiliaires pour caoutchoucs, et au moins un oligosulfure de carboxyalkyle de formule :

   $R^1$-$(S)_r$-$R^2$

   dans laquelle
   $R^1$ et $R^2$, ayant des significations identiques ou différentes, représentent chacun un groupe alkyle en $C_1$ à $C_{18}$ ou cycloalkyle en $C_5$-$C_{18}$ portant un à quatre substituants carboxyles ou carboxylates, le cation, dans ce dernier cas, consistant en un groupe ammonium, un groupe mono-, di- ou tri-(alkyle en $C_1$ à $C_{18}$)-ammonium ou mono-, di- ou tri-(aryle en $C_6$-$C_{18}$)-ammonium ou mono-, di- ou tri-(alkylaryle en $C_7$-$C_{21}$)-ammonium, ou en un atome de métal mono- à tétra-valent et
   r est un nombre entier allant de 3 à 6,
   en quantités de 0,1 à 10 % du poids du caoutchouc.

2. Utilisation des mélanges de caoutchoucs selon la revendication 1 pour la fabrication de vulcanisats de caoutchoucs.

**Revendication pour l'Etat contractant suivant : ES**

1. Procédé de préparation de vulcanisats de caoutchoucs, caractérisé en ce que l'on mélange :
   (i) le caoutchouc non vulcanisé,
   (ii) 10 à 120 % du poids du caoutchouc (i) de noir de carbone et/ou de silice, et
   (iii) 0,1 à 10 % du poids du caoutchouc (i) d'oligosulfures de carboxyalkyle de formule :

   $R^1$-$(S)_r$-$R^2$

   dans laquelle
   $R^1$ et $R^2$, ayant des significations identiques ou différentes, représentent chacun un groupe alkyle en $C_1$ à $C_{18}$ ou cycloalkyle en $C_5$-$C_{18}$ portant un à quatre substituants carboxyles ou carboxylates, le cation, dans ce dernier cas, consistant en un groupe ammonium, un groupe mono-, di- ou tri-(alkyle en $C_1$ à $C_{18}$)-ammonium ou mono-, di- ou tri-(aryle en $C_6$-$C_{18}$)-ammonium ou mono-, di- ou tri-(alkylaryle en $C_7$-$C_{21}$)-ammonium, ou en un atome de métal mono- à tétra-valent et
   r est un nombre entier allant de 3 à 6,
   à des températures dans la masse de 120 à 200 °C et des vitesses de cisaillement de 1 à 1000 $s^{-1}$, on mélange ensuite les autres produits chimiques de vulcanisation et, le cas échéant, d'autres produits auxiliaires pour caoutchoucs, à des températures inférieures à 120 °C, puis on vulcanise aux températures usuelles.